Europäisches Patentamt

European Patent Office

Office européen des brevets

(11) Publication number: **0 307 716**
**A1**

# EUROPEAN PATENT APPLICATION

(21) Application number: 88114152.7

(22) Date of filing: 30.08.88

(51) Int. Cl.⁴: **C10M 175/00 , B01D 17/02**

(30) Priority: 17.09.87 JP 231141/87

(43) Date of publication of application:
22.03.89 Bulletin 89/12

(84) Designated Contracting States:
DE FR GB IT

(71) Applicant: Takano Corporation
60, Miyacho 1-chome
Ohmiya-shi Saitama-ken(JP)

(72) Inventor: Nakajima, Yoshiaki
249-7, Nakazato
Yono-shi Saitama(JP)
Inventor: Tsuruizumi, Akie
10-17, Kibohgaoka 1-chome&Chigusa-ku
Nagoya-shi Aichi(JP)

(74) Representative: Strehl, Schübel-Hopf,
Groening, Schulz
Maximilianstrasse 54 Postfach 22 14 55
D-8000 München 22(DE)

(54) Method for removing traces of water from power transformer oil.

(57) Fired cristobalite is plunged into transformer oil in a power transformer to adsorb traces of water present in the transformer oil by the fired cristobalite, thereby eliminating the need for cleaning of the transformer oil and repeated determination of the water content of the transformer oil.

# FIG.I

## Method for removing traces of water from power transformer oil

Field of the Invention and Related Art Statement

This invention relates to a method for removing traces of water present in insulating oil charged in a power transformer.

Most power transformers, according to their applications such as for power distribution systems, in exteriors of power stations and transformers substations or, for power service lines, on utility poles, are exposed to the weather. Although these transformers have strict waterproofing structures, since they are exposed directly to rain and sunlight, with varying amounts of self-heat emission due to fluctuation of load, a substantial pressure difference occurs between inside and outside of the transformers which, even small in amount, causes communication of air between the inside and outside.

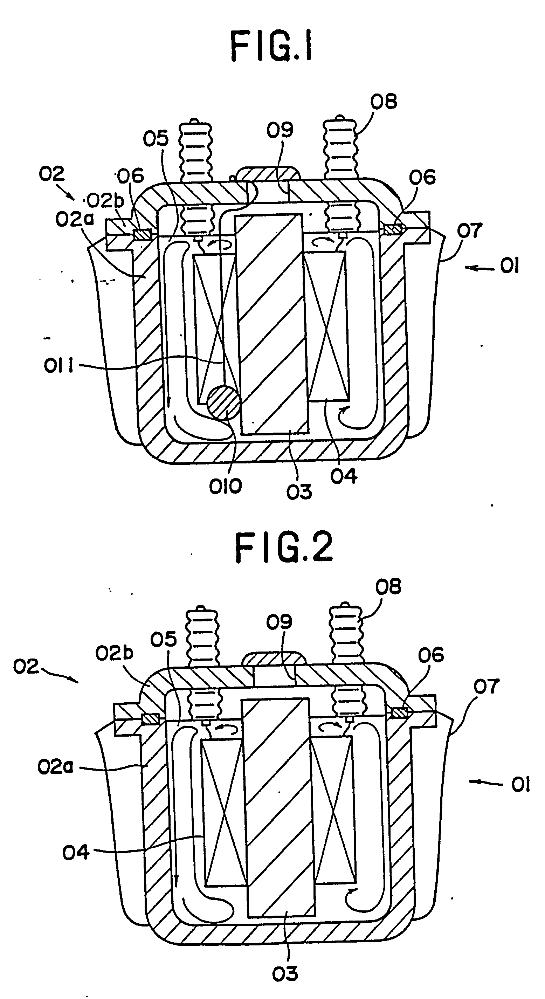

Fig. 2 is a schematic sectional view of a power transformer. Referring to Fig.2, a power transformer 01 has a transformer enclosure 02 comprising a transformer enclosure body 02a and a cover 02b, in which a core 03 and coils 04 wound around the core 03 are dipped in transformer oil 05. A packing 06 is inserted between the transformer enclosure body 02a and the cover 02b to seal the transformer enclosure 02. The transformer enclosure 02 is provided on its outer peripheral surface with a radiator unit 07 comprising, for example, radiator fins or radiator pipes. The cover 02b is provided with input/output terminals 08 and a checking port 09 to check transformer oil 05.

The transformer oil 05 insulates the core 03 and the coils 04 from the transformer enclosures body 02a, and transmits heat generated by electrical losses in the coils 04 and magnetic losses in the core 03 to the transformer enclosure 02. The heat transmitted to the transformer enclosure body 02a is dissipated at the radiator unit 07.

Therefore, the transformer oil 05 should always be circulated with good fluidity during the operation of the transformer 01, and a mineral or synthetic oil with good fluidity and durability is used as the transformer oil 05. Since the volume of transformer oil 05 varies with changes in temperature inside the transformer 01 and ambient conditions, the transformer 01 is not filled up to its full volume with the transformer oil 05. Thus, the transformer 01 has in its interior a space to cope with changes in temperature and other conditions.

However, as described above, the transformer 01 is used in the state of being fully exposed to the weather and, even it is sealed, it inevitably undergoes replacement of air due to difference in pressure between the inside and outside (this is referred to "respiration of transformer"). Thus, there occurs a problem in that moisture in the outside atmosphere and that adhering onto the outer walls of the transformer enclosure 02 is taken together with air into the interior of the transformer 01, and the moisture thus taken into the interior of the transformer 01 is inevitably absorbed by the circulating transformer oil 05, increasing its water content.

The water content of the transformer oil 05 should normally be below 20 ppm. If it is increased to 100-200 ppm or more, the dielectric strength of the transformer oil will be deteriorated which leads to insulation breakdown, short circuit, or even ignition of the transformer oil due to flash over.

Since water in the transformer oil 05 is taken in by the respiration due to pressure difference between the outside and inside of the transformer 01, it is very difficult to estimate its content and, heretofore, the transformer oil 05 has been checked at intervals determined from experience.

The checks are performed, for example, as follows:

(1) The transformer is replaced with a spare transformer in a possible shortest time.

(2) A sample of transformer oil is obtained from the former transformer.

(3) The sample is measured for discharge distance at a constant voltage using needle electrodes, and water content is calculated from the measured discharge distance.

(4) The transformer oil is cleaned by passing it through a filter having a demoisturizing function for a specified time.

(5) A sample is obtained from the cleaned transformer oil.

(6) Water content of the sample is determined as in step (3), and the procedure of steps (4), (5), and (6) is repeated until the water content is below a specified value.

As described above, the checking work requires a substantial time and, since it is necessary to periodically check a very large number of transformers, requires large amounts of labor and large-size working vehicles for moving the transformers.

With a view to eliminate the prior art problem, it is a primary object of the present invention to provide a method for removing water from transformer oil very easily.

## Summary of the Invention

In accordance with the present invention which attains the above object, there is provided a method for removing water from transformer oil comprising adding fired cristobalite into transformer oil in a power transformer to adsorb traces of water present in the transformer oil.

With the method according to the present invention, water present in transformer oil can be very easily removed only by adding fired cristobalite into the transformer oil, and the water content of the transformer oil can be maintained at a constant level by only periodically replacing the fired cristobalite in the transformer oil, thereby eliminating the need for cleaning of the transformer oil and repeated work for the determination of water content of the transformer oil, with reduced labor requirement and improved working efficiency. Cristobalite is an ore which occurs in nature, and can be processed simply by forming and firing with a very small amount of labor and at a very low cost. Since cristobalite is obtained in almost inexhaustible amounts, it can be used very economically.

## Brief Description of the Drawings

Fig. 1 is a schematic sectional view of a transformer in an embodiment of the present invention.
Fig. 2 is a schematic sectional view of a prior art transformer.

## Detailed Description of the Invention

Fired cristobalite used in the present invention is produced by firing porous natural cristobalite ore at a temperature of 500 to 1,300 degrees C, and has the chemical composition as shown in Table 1.

Table 1

| Chemical Composition of cristobalite | | | | | | |
|---|---|---|---|---|---|---|
| Component | $SiO_2$ | $Al_2O_3$ | $Fe_2O_3$ | $K_2O$ | MgO | Others |
| Content (%) | 85.7 | 6.40 | 1.90 | 0.90 | 0.60 | 4.50 |

The fired cristobalite contains an aluminum silicate hydrate ($SiO_2/Al_2O_3-_4$), called montmorillonite, which has a high adsorption ability and adsorbs water in transformer oil.

Montmorillonite has an $Al_2O_3$ type layered structure, with a strong base exchange function. This layered structure is a stack of two-dimensional layers, spaced by very small distances of 2 to 3 angstroms, which is unique to the substance. Due to these narrow spaces, the substances has a high intermolecular energy, which exhibits a so-called adsorption ability, nearly chemical adsorption, to traces of water present in oils. Thus, extraction of once adsorbed water requires over five-times the energy required for adsorption. The adsorbed water is retained even at a temperature of several tens of degrees C. Therefore, the substance is ideally suited for removal of water present in oils or the like.

The fired cristobalite preferably has a large surface area and shapes suitable for the adsorption of water, for example, in the form of granules 3 to 5 mm in particle size. The fired cristobalite is added preferably in an amount of 0.1 to 0.5% to transformer oil.

The method according to the present invention is not limited to the use for removing water from transformer oil of power transformers, but can also be used for removing traces of water from oils used in other kinds of devices.

An embodiment of the present invention when applied to the transformer 01 described previously will now be described. The structure of the transformer 01 is the same as that of the prior art transformer and is not described here. Referring to Fig. 1, an oil-resistant net bag 010 with a rope 011, which is filled with about 50 g of granular fired cristobalite, is plunged through a checking port 09 into transformer oil 05 in a transformer enclosure 02 (about 50 liters in volume), and with the rope 011 pinched, the checking port 09 is closed. The thus plunged cristobalite comes into contact with circulating transformer oil 05 to adsorb and remove water present in the transformer oil. This eliminates the need for frequent checking of insulation, and the periodic replacement of the fired cristobalite can be performed very easily.

**Claims**

1. A method for removing traces of water in power transformer oil, comprising adding fired cristobalite to the transformer oil.

2. The method of claim 1, wherein said fired cristobalite is produced by firing natural cristobalite ore at a temperature of 500 to 1,300 degrees C.

3. The method of claim 1 or 2, wherein said fired cristobalite is in the form of granules having a particle diameter of 3 to 5 mm.

4. The method of any of claims 1 to 3, wherein said fired cristobalite is added in an amount of 0.1 to 0.5% to said transformer oil.

5. The method of any of claims 1 to 4, wherein said fired cristobalite is charged into a net bag (010) with a rope (011) and plunged through a checking port (09) of the transformer (01), and said checking port (09) is sealed with said rope (011) pinched by said checking port.

# FIG.1

# FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-B-1 004 322 (THE CARBORUNDUM CO.) * Column 1, lines 1-32; column 2, lines 37-40; column 4, lines 13-19,64,65; claims 1,9 * | 1-4 | C 10 M 175/00 B 01 D 17/02 |
| X | FR-A-2 278 138 (TRAFOFIT GmbH) * Whole document * | 1-5 | |
| A | FR-A-2 237 842 (C. JUI-CHENG-HSU) * Page 1, lines 1-28; page 2, lines 19-27; claim 1; figure 1 * | 5 | |

TECHNICAL FIELDS SEARCHED (Int. Cl.4)

C 10 M
B 01 D

The present search report has been drawn up for all claims

| Place of search | Date of completion of the search | Examiner |
|---|---|---|
| THE HAGUE | 29-11-1988 | FISCHER W.H.F. |